# DEMANDE DE BREVET EUROPEEN

(11) **EP 3 995 552 A1**
(43) Date de publication de la demande: **11.05.2022**
(21) Numéro de dépôt: 21306570.9
(22) Date de dépôt: 09.11.2021
(51) Int. Cl.: C09J 7/29, B32B 7/12, C09J 7/21

(54) **ETIQUETTE REALISEE A PARTIR DE MATERIAUX BIODEGRADABLES ET COMPOSTABLES ET PRESENTANT DES PROPRIETES MECANIQUES AVANTAGEUSES**

(30) Priorité: 10.11.2020 FR 2011514
(71) Demandeur: Seala, 16400 La Couronne (FR)
(72) Inventeur: BISSON, Laurent, 37300 JOUE LES TOURS (FR)
(74) Mandataire: Plasseraud IP

(57) **Abrégé**

La présente invention concerne de façon générale le domaine de l'étiquetage et plus précisément, une étiquette réalisée à partir de matériaux naturels, préférentiellement biodégradables et compostables présentant des propriétés mécaniques avantageuses, son procédé de fabrication ainsi que ses utilisations.

## Description

### Domaine technique

La présente invention concerne de façon générale le domaine de l'étiquetage et plus précisément, une étiquette réalisée à partir de matériaux naturels, préférentiellement biodégradables et compostables présentant des propriétés mécaniques avantageuses ainsi que ses utilisations.

### Technique antérieure

L'étiquetage des produits est une obligation fixée par des normes européennes mais aussi françaises. Chaque produit vendu, qu'il s'agisse d'un produit alimentaire, de consommation courante, d'un vêtement ou d'un produit chimique, répond à un étiquetage particulier.

Aussi, il est obligatoire d'appliquer une étiquette sur un article tel un produit alimentaire afin d'identifier le produit et fournir des informations, telles que sa provenance ou sa date limite de consommation.

Ces étiquettes peuvent être composées d'un support de base ou substrat sur lequel est apposé un film par collage, typiquement avec une colle aqueuse. C'est sur ce film que seront imprimées les informations nécessaires pour l'identification.

Des étiquettes composées typiquement, d'un support de base en papier et d'un film polypropylène mono-orienté, collés grâce à une colle aqueuse, sont connues de l'état de la technique et offrent des propriétés mécaniques très intéressantes en termes de résistance mais également en termes de rigidité, du fait notamment, de l'épaisseur du film polypropylène mono-orienté.

Alors que ces étiquettes répondent aux critères du marché, la demande s'intensifie pour l'obtention d'étiquettes réalisées à partir de matériaux naturels, préférentiellement biodégradables et compostables, plutôt que des produits issus de la pétrochimie.

Il existe donc un besoin pour des étiquettes réalisées à partir de matériaux naturels, préférentiellement biodégradables et compostables.

Des étiquettes comprenant un support papier, une colle aqueuse et un polymère naturel en tant que biofilm sont connus de l'état de la technique. En effet, des polymères naturels peuvent être utilisés pour la fabrication de biofilms et ont été développés pour remplacer les polymères issus de la pétrochimie. Ces polymères sont formés à partir de matières premières telles que du bois, du blé, de la pomme de terre, du maïs, des algues, et sont des polymères d'amidon, de caséine, d'acide polylactique, de cellulose ou de polyhydroxyalcanoates (PHA).

Toutefois, ces polymères naturels n'offrent pas des propriétés mécaniques et de résistance similaires au film plastique, ni la rigidité attendue.

Il est ainsi nécessaire de mettre au point une étiquette réalisée à partir de matériaux naturels, préférentiellement biodégradables et compostables offrant des propriétés mécaniques et de résistance similaires aux films issus de la pétrochimie.

Le brevet IT201800005340 décrit un procédé d'obtention d'un film en matériau polymère compostable et/ou biodégradable pour la production d'articles d'emballage décoratif ayant des caractéristiques mécaniques spécifiques. Ces films sont obtenus par exemple à partir d'amidon ou d'acide polylactique et peuvent comprendre une seconde couche compostable et biodégradable. Ces biofilms ainsi obtenus sont résistants et d'une grande souplesse de manière à former des emballages cadeaux ou décoratif tels que des papiers cadeaux, des papiers d'emballage floraux, des rubans, des noeuds, du raphia.

Dans le domaine de l'étiquetage, le marché réclame une certaine rigidité de l'étiquette, appelée la « main ». Cette main est définie comme le rapport entre l'épaisseur et le grammage d'une étiquette.

Cette rigidité est d'autant plus difficile à obtenir, dès lors que l'étiquette se compose de deux matériaux contrecollés. En effet, le séchage de l'étiquette génère un rétreint qui altère les propriétés mécaniques de l'étiquette et donc sa rigidité. Le rétreint se caractérise par la propension du matériau à rétrécir. En effet, le substrat en papier contient de l'eau. Lors du séchage, le papier devient alors cassant et/ou se courbe (tuilage ou « curling » en anglais). Ce phénomène est également observé avec les polymères naturels. En effet, un inconvénient des polymères naturels est leur vieillissement rapide causé par une forte sensibilité à l'humidité. Le biofilm composé de un ou plusieurs polymères naturels s'enroule après séchage selon le même phénomène de tuilage. Ce défaut est rédhibitoire pour des étiquettes.

De plus, les caractéristiques intrinsèques des polymères naturels typiquement leur souplesse, sont également une contrainte lorsqu'il s'agit d'obtenir une étiquette rigide.

Aussi, il est nécessaire d'identifier les matériaux et colles spécifiques pour qu'une étiquette comprenant un substrat papier et un biofilm ne subisse pas un vieillissement prématuré et un phénomène de « curling » au séchage. Ces matériaux devront également permettre d'assurer la rigidité de l'étiquette, sans altération de ses propriétés mécaniques.

Il est ainsi nécessaire de mettre au point des étiquettes réalisées à partir de matériaux naturels, préférentiellement biodégradables et compostables possédant des propriétés mécaniques intéressantes en termes de résistance mais également en termes de rigidité.

### Résumé

La présente invention concerne une étiquette comprenant
- un substrat,
- un biofilm,
caractérisée en ce que ledit biofilm comprend un mélange d'amidon, d'acide polylactique et de polyester, et en ce que la colle qui lie le support de base au biofilm est une colle non aqueuse.

Avantageusement, le biofilm de l'étiquette selon l'invention possède des propriétés mécaniques similaires à celles de films issus de la pétrochimie décrits dans l'état de la technique.

Avantageusement encore, l'étiquette selon l'invention présente une rigidité répondant parfaitement aux attentes du marché, sans phénomène de tuilage une fois le biofilm et le substrat collé.

Selon un second aspect, la présente invention concerne l'utilisation d'une étiquette selon l'invention pour l'étiquetage de produits, préférentiellement des produits alimentaires.

### Description détaillée

Ainsi la présente invention concerne une étiquette comprenant :
- un substrat ;
- un biofilm,
caractérisée en ce que ledit biofilm comprend un mélange d'amidon, d'acide polylactique et de polyester, et en ce que la colle qui lie le support de base au biofilm est une colle non aqueuse.

### Biofilm

On entend par « biofilm » un film mono-orienté obtenu à partir de matières premières naturelles, préférentiellement à partir d'au moins un polymère naturel ou un mélange de polymères naturels.

L'amidon pourra être obtenu à partir de graines telles que les graines de châtaignes, les graines de céréales comme le blé, le maïs et le froment, et les graines de légumineuses telles le soja, les haricots, les pois, le pois chiche, l'arachide, la lentille cultivée, la luzerne cultivée, les trèfles, les fèves, le caroubier, la réglisse, à partir des racines, à partir des tubercules et des rhizomes telles que les tubercules et rhizomes de pomme de terre, de patate douce et de manioc, à partir de fruits tels que la banane ou l'arbre à pain.

Selon un mode de réalisation, le biofilm comprend :
- de 5 à 15% en poids d'amidon, par rapport au poids total du biofilm ;
- de 35 à 45% en poids d'acide polylactique, par rapport au poids total du biofilm, ;
- de 25 à 35% en poids de polyester, par rapport au poids total du biofilm.

Typiquement, le polyester est un eco polyester certified.

Selon un mode de réalisation, le biofilm comprend en outre du carbonate de calcium.

Selon un mode de réalisation, le biofilm comprend :
- de 5 à 15% en poids, par rapport au poids total du biofilm, d'amidon ;
- de 35 à 45% en poids, par rapport au poids total du biofilm, d'acide polylactique ;
- de 5 à 15% en poids, par rapport au poids total du biofilm, de carbonate de calcium ;
- de 25 à 35% en poids, par rapport au poids total du biofilm, de polyester tel qu'un eco polyester certified.

A titre illustratif, le produit BOLISLIFE^{®} commercialisé par la société BOLIS pourra être utilisé en tant que biofilm.

Selon un mode de réalisation, l'épaisseur du biofilm est comprise entre 65 et 120µm, préférentiellement entre 75 et 110µm, et de manière encore plus préférée entre 71.25 µm et 78.78µm.

Typiquement, l'épaisseur du biofilm est d'environ 75µm.

Avantageusement, la finesse du biofilm lui permet d'être plus facilement biodégradable et compostable tout en conservant des propriétés mécaniques de résistance et de rigidité avantageuses.

Le biofilm selon l'invention est caractérisé par ses propriétés mécaniques avantageuses, typiquement un allongement à la rupture longitudinale supérieur à 15%.

Typiquement, l'allongement à la rupture longitudinale du biofilm selon l'invention est inférieur à 31%.

L'allongement à la rupture pourra être mesuré par toute technique connue de l'homme du métier. A titre illustratif, l'allongement à la rupture longitudinale pourra être mesuré à l'aide d'un dynamomètre sur un échantillon de 105x25mm.

Typiquement, le biofilm selon l'invention possède également une résistance longitudinale supérieure ou égale à 100N/mm². La mesure de la résistance longitudinale est effectuée par toute méthode connue de l'homme du métier. A titre illustratif, la résistance longitudinale pourra être mesurée à l'aide d'un dynamomètre sur un échantillon de 105x25mm.

Typiquement, le biofilm selon l'invention se caractérise également par un rétrécissement à 100 degrés d'environ 25% et un rétrécissement à 60 degrés d'environ 4%.

Le rétrécissement est mesuré par toute technique connue de l'homme du métier. Typiquement, le biofilm est placé dans un four à air chaud préchauffé à 100°C. Après 10 minutes, l'échantillon est prélevé et après un temps de refroidissement d'une minute, le changement de longueur est mesuré dans le sens longitudinal.

Ces propriétés mécaniques confèrent à l'étiquette une grande résistance dans le sens de sa largeur mais lui permettent d'être facilement déchirable dans le sens de sa longueur.

Le biofilm pourra être obtenu par tout procédé connu de l'homme du métier, permettant de lui conférer des propriétés mécaniques avantageuses. Typiquement, le biofilm pourra être obtenu par tout procédé d'extrusion à plat connu de l'homme du métier permettant de conférer au biofilm ses propriétés avantageuses. Par exemple, le biofilm pourra être obtenu par tout procédé d'extrusion à plat bénéficiant d'un contrôle de température optimisé lors de la phase d'extrusion.

A titre illustratif, le biofilm pourra être obtenu par le procédé tel que décrit dans la demande IT201800005340. Le procédé selon la demande IT201800005340 est un procédé d'extrusion à plat comprenant :
- une étape d'introduction d'un matériau polymère compostable et/ou biodégradable dans une extrudeuse à tête plate comprenant au moins un corps creux contenant une vis rotative définissant une pluralité de zones à l'intérieur du corps creux, un ensemble filtre / col placé à la sortie du corps creux et une tête plate d'extrusion placée en aval du groupe filtre/col ;
- une étape d'extrusion progressive du matériau polymère compostable et/ou biodégradable portant progressivement le matériau polymère compostable et/ou biodégradable à une température ne dépassant pas 190°C ;
- une étape de refroidissement du film polymère extrudé compostable et/ou biodégradable ;
- une étape d'étirage du film en matériau polymère compostable et/ou biodégradable extrudé au moyen d'une étape d'étirage unidirectionnelle comprenant une pluralité de rouleaux motorisés et chauffés, dont au moins un premier rouleau est maintenu à une température comprise entre 50°C et 70°C et est entraîné à une vitesse comprise entre 9 m/min et 12 m/min, au moins un deuxième rouleau est maintenu à une température comprise entre 80°C et 115°C et entraîné à une vitesse comprise entre 45 m/min et 60 m/min, et au moins un troisième rouleau est maintenu à une température comprise entre 50°C et 70°C et entraîné à une vitesse comprise entre 40 m/min et 50 m/min.

### Imprimabilité

Avantageusement, le biofilm selon l'invention possède des propriétés naturelles d'imprimabilité, sans application préalable d'un traitement de surface, et de blancheur.

Le biofilm selon l'invention permet en effet une accroche avantageuse des encres offrant une longue tenue dans le temps des informations imprimées sur le biofilm.

Cette imprimabilité est obtenue sans traitement de surface, qui dans l'état de la technique est nécessaire, notamment pour les films polypropylène, afin de faire tenir l'encre. Aussi, l'utilisation du biofilm selon l'invention facilite le procédé de fabrication des étiquettes en ce qu'une étape de traitement n'est plus nécessaire avant l'impression.

### Support de base ou substrat

Selon un mode de réalisation, le support de base ou substrat est un support de base en papier.

Préférentiellement, le support de base en papier sera composé à 100% de cellulose.

A titre illustratif, le produit Condat gloss commercialisé par la société LECTA pourra être utilisé.

### Colle non aqueuse

Selon un mode de réalisation, la colle est une colle à base de polyuréthane.

Les colles aqueuses de l'état de la technique induisent un phénomène de « curling » du biofilm selon l'invention et ne permettent pas d'obtenir une étiquette possédant ses caractéristiques de rigidité et une étiquette plane.

Avantageusement, une colle à base de polyuréthane est utilisée et permet l'obtention d'étiquette plane sans phénomène de tuilage.

Selon un mode de réalisation, la colle est un mélange de polyurethane polyisocyanate et de polyester polyol.

Préférentiellement, la couche adhésive biodégradable comprend une teneur en poids de 44,4% de polyurethane polyisocyanate et de 55,6% de polyester polyol, par rapport au poids total de la couche adhésive biodégradable.

Typiquement, le produit SunLam^{™} SFC100/HAC-306, commercialisé par la société SunChemical^{®} pourra être utilisé.

### Biodégradable et/ou compostable

Selon un mode de réalisation, l'étiquette selon l'invention est biodégradable, préférentiellement compostable. La norme EN13432, (Journal Officiel des Communautés Européennes, JOCE, du 12 juillet 2001), intitulée « Caractéristiques des emballages valorisables par compostage et biodégradation», est une norme harmonisée du Comité européen de normalisation, relative aux caractéristiques qu'un matériau doit posséder pour pouvoir être qualifié de biodégradable et compostable. Pour la France, cette norme est intégrée en ordre interne sous la dénomination NF EN 13432.

Un matériau sera considéré comme biodégradable s'il possède la caractéristique suivante :
- la biodégradabilité, c'est la conversion métabolique du matériau compostable en dioxide de carbone (CO₂), eau (H₂O) et humus. Cette propriété est mesurée par des tests standards et normalisés (ISO 14855: biodégradabilité en conditions de compostage contrôlé). Pour qu'un matériau soit considéré comme biodégradable celui-ci doit être en mesure d'atteindre 90% de biodégradation en moins de 6 mois.

Un matériau sera considéré comme « compostable » s'il possède les caractéristiques suivantes :
- la biodégradabilité, comme ci-avant définie.
- la désintégration, c'est la fragmentation et la perte totale de visibilité dans le compost final (absence de contamination visuelle). Cette désintégration est mesurée par un test de compostage à échelle-pilote (prEN 14045). Des échantillons de matériau d'essai sont compostés avec des déchets organiques pendant 3 mois. A la fin, le compost est tamisé avec un tamis de 2 mm. La totalité des résidus supérieurs à 2mm doit alors être inférieure à 10% de la masse initiale.
- une très faible concentration en métaux lourds (valeurs maximales prédéfinies) et une bonne qualité du compost (contrôles de l'écotoxicité et de la valeur agronomique). Un test de croissance des plantes (test OECD 208 modifié) est effectué sur des échantillons de compost où la dégradation du matériau de test a eu lieu. Aucune différence avec le compost témoin ne doit être mise en évidence.
- Permanence des paramètres chimio-physiques. Certains de ces paramètres doivent rester inchangés après la dégradation du matériau étudié. Concentration d'azote (N), Concentration de Phosphore (P), Concentration de Magnésium (Mg), Concentration de potassium (K), PH, Contenu salin, Niveau solides-volatiles.
- une absence d'effets négatifs sur le déroulement du processus de compostage. Test de contrôle de compostage à échelle-pilote.

Le support papier, la colle polyuréthane ainsi que le biofilm selon l'invention, sont biodégradables et compostables selon les critères de la norme EN 13432.

### Utilisation

La présente invention concerne également l'utilisation d'une étiquette selon l'invention pour l'étiquetage de produits, préférentiellement l'étiquetage de produits alimentaires.

### Exemples

### Exemple 1 : obtention d'une étiquette biodégradable et compostable selon la présente invention

Le procédé comprend une première étape d'assemblage du substrat papier et du biofilm, le biofilm étant préalablement enduit, sur au moins une de ses surfaces de colle non-aqueuse, afin de complexer le biofilm au substrat papier.

Le complexe substrat papier/biofilm va subir une seconde étape d'enroulage sous forme par exemple de bobine et une troisième étape de découpage pour obtenir la laize souhaitée.

Le procédé comprend une quatrième étape d'impression du biofilm.

### Exemple 2 : comparaison des propriétés mécaniques et de résistance de l'étiquette selon la présente invention avec celles des étiquettes connues de l'état de la technique

Une étiquette issue de la pétrochimie a été comparée avec l'étiquette selon la présente invention. De manière très avantageuse, l'étiquette selon l'invention possède des propriétés mécaniques similaires à l'étiquette issue de la pétrochimie.

**[Tableau 1]**

| | | Etiquette de l'état de la technique | Etiquette selon la présente invention |
|---|---|---|---|
| Composition | Support de base | 100% cellulose | 100% cellulose |
| | Colle | Colle base aqueuse | Colle à base de polyuréthane |
| | | | 44,4% de polyurethane polyisocyanate et de 55,6% de polyester polyol |
| | | | produit SunLam^{™} SFC100/HAC-306, commercialisé par la société SunChemical^{®} |
| | Film | Polypropylène blanc mono-orienté | Biofilm comprenant - de 5 à 15% en poids par rapport au poids total du biofilm d'amidon ; - de 35 à 45% en poids par rapport au poids total du biofilm d'acide polylactique ; - de 5 à 15% en poids par rapport au poids total du biofilm de carbonate de calcium ; - de 25 à 35% en poids par rapport au poids total du biofilm de polyester tel qu'un eco polyester certified. |
| | | | Produit BOLISLIFE^{®} commercialisé par la société BOLIS |
| Epaisseur | Support de base | 86µm | 86µm |
| | Film | 110µm | 75µm |
| | Etiquette | 196µm | 161 µm |
| Grammage | Support de base | 115g/m² | 115g/m² |
| | Film | 68g/m² | 85g/m² |
| | Etiquette | 186g/m² | 203g/m² |
| Main | Support de base | 0,75 cm³/g | 0,75 cm³/g |
| | Film | 1,67 cm³/g | 0,882 cm³/g |
| | Etiquette | 1,05 cm³/g | 0,793 cm³/g |

### Calcul de la main

La main du support de base, des films ainsi que des étiquettes correspond au rapport entre l'épaisseur et le grammage du support de base, du film ainsi que de l'étiquette. L'unité est le cm³/g.

De manière surprenante, la main de l'étiquette selon l'invention est très inférieure à celle de l'étiquette de l'état de la technique. Toutefois, l'étiquette selon l'invention présente une rigidité similaire à celle de l'étiquette de l'état de la technique et répond parfaitement aux attentes du marché.

Par ailleurs, l'étiquette ne présente pas de phénomène de curling ou tuilage une fois le biofilm et le substrat collé.

**[Tableau 2]**

| | Film polypropylène de l'étiquette de l'état de la technique | Biofilm de l'étiquette selon l'invention |
|---|---|---|
| Allongement à la rupture longitudinale | Supérieur à 15%* | Supérieur à 15% |
| Résistance longitudinale | 100 N/mm^{2*} | Supérieure ou égale à 100 N/mm² |

| | | |
|---|---|---|
| * mesure selon la norme la norme NF EN ISO 527-3 de Décembre 2018 | | |

Avantageusement, le biofilm de l'étiquette selon l'invention possède des propriétés mécaniques similaires à celles du film issu de la pétrochimie de l'état de la technique.

### Exemple 3 : Rigidité de l'étiquette sans phénomène de tuilage

Des étiquettes comprenant un support papier, une colle aqueuse et un polymère naturel tels que des polymères à base d'amidon de caséine, d'acide polylactique, de cellulose et de polyhydroxyalcanoates (PHA) sont connus de l'état de la technique.

Le séchage de ces étiquettes génère un retreint qui altère les propriétés mécaniques de l'étiquette et donc sa rigidité. Le papier devient cassant et se courbe (tuilage ou « curling » en anglais).

En revanche, le biofilm selon l'invention, comprenant un mélange d'amidon, d'acide polylactique et de polyester, une fois collé au substrat avec une colle non aqueuse telle qu'une colle à base de polyuréthane ne présente pas de phénomène d'enroulement et reste rigide.

L'association de polymère selon l'invention et de la colle non aqueuse permet d'offrir une rigidité à l'étiquette, conformément aux attentes du marché.

Aussi, les étiquettes selon l'invention sont réalisées à partir de matériaux naturels biodégradables et compostables et possèdent des propriétés mécaniques avantageuses et similaires aux étiquettes issues de la pétrochimie, en termes de résistance mais également en termes de rigidité et ne possèdent pas les inconvénients de tuilage liés aux polymères naturels.

## Revendications

1. Etiquette comprenant :
- un substrat ;
- un biofilm,
**caractérisée en ce que** ledit biofilm comprend un mélange d'amidon, d'acide polylactique et de polyester, et **en ce que** la colle, qui lie le support de base au biofilm est une colle non aqueuse.

2. Etiquette selon la revendication 1, **caractérisée en ce que** le biofilm comprend :
- de 5 à 15% en poids d'amidon, par rapport au poids total du biofilm ;
- de 35 à 45% en poids d'acide polylactique, par rapport au poids total du biofilm ;
- de 25 à 35% en poids, par rapport au poids total du biofilm, de polyester.

3. Etiquette selon la revendication 1 ou 2, **caractérisée en ce que** le biofilm comprend en outre du carbonate de calcium.

4. Etiquette selon l'une quelconque des revendications 1 à 3, **caractérisée en ce que** le biofilm comprend :
- de 5 à 15% en poids d'amidon, par rapport au poids total du biofilm ;
- de 35 à 45% en poids d'acide polylactique, par rapport au poids total du biofilm ;
- de 5 à 15% en poids de carbonate de calcium, par rapport au poids total du biofilm ;
- de 25 à 35% en poids de polyester, par rapport au poids total du biofilm.

5. Etiquette selon l'une quelconque des revendications 1 à 4, **caractérisée en ce qu'**elle possède un allongement à la rupture longitudinale supérieur à 15%.

6. Etiquette selon l'une quelconque des revendications 1 à 5, **caractérisée en ce que** l'épaisseur du biofilm est comprise entre 65 et 120µm, préférentiellement l'épaisseur du biofilm est d'environ 75µm.

7. Etiquette selon l'une quelconque des revendications 1 à 6, **caractérisée en ce que** le support de base est un support en papier, préférentiellement composé à 100% de cellulose.

8. Etiquette selon l'une quelconque des revendications 1 à 7, **caractérisée en ce que** la colle est une colle à base de polyuréthane.

9. Etiquette selon la revendication 8, **caractérisée en ce que** la colle est un mélange de polyurethane polyisocyanate et de polyester polyol.

10. Utilisation d'une étiquette selon l'une quelconque des revendications 1 à 9 pour l'étiquetage de produits, préférentiellement l'étiquetage de produits alimentaires.
